# EUROPÄISCHE PATENTSCHRIFT

(11) **EP 0 547 415 B1**
(45) Veröffentlichungstag und Bekanntmachung des Hinweises auf die Patenterteilung: **28.08.1996**
(21) Anmeldenummer: 92120374.1
(22) Anmeldetag: 28.11.1992
(51) Int. Cl.: G01S 17/02, H03K 17/94, E03C 1/05

(54) **Einrichtung zur berührungslosen Steuerung einer Sanitärarmatur**
Device for remotely actuating a sanitary fitting
Dispositif pour commander une armature sanitaire à distance

(30) Priorität: 19.12.1991 DE 4141944
(43) Veröffentlichungstag der Anmeldung: 23.06.1993
(73) Patentinhaber: HANSA METALLWERKE AG, D-70567 Stuttgart (DE)
(72) Erfinder: Kunkel, Horst, W-7060 Schorndorf-Miedelsbach (DE)
(74) Vertreter: Ostertag, Ulrich

(56) Entgegenhaltungen:
- EP-A- 0 099 729
- EP-A- 0 463 440
- DE-B- 2 403 052
- FR-A- 2 561 049
- US-A- 4 266 220
- US-A- 4 687 924

## Beschreibung

Die Erfindung betrifft eine Einrichtung zur berührungslosen Steuerung einer Sanitärarmatur mit
a) einer Sende-/Empfangseinheit, welche enthält:
   aa) einen Sender, welcher eine Strahlung in einen Überwachungsraum aussendet;
   ab) einen ersten Empfänger, welcher Strahlung, die an einem Objekt im Überwachungsraum reflektiert wurde, empfängt;
b) einer Schaltungsanordnung, welche enthält:
   ba) eine Treiberschaltung, welche eine Spannung zum Betrieb des Senders bereitstellt, deren Größe die Intensität der abgegebenen Strahlung bestimmt;
   bc) einen ersten Detektionskreis, dem das Ausgangssignal des ersten Empfängers zugeführt wird und ein Ausgangssignal erzeugt, wenn das Ausgangssignal des ersten Empfängers einen bestimmten Schwellwert übersteigt.

Bei Einrichtungen dieser Art besteht immer das Problem, daß die elektronischen und/oder mechanischen Komponenten altern, was Einfluß auf die Empfindlichkeit der Gesamtanordnung haben kann. Läßt die Empfindlichkeit während der Betriebszeit, z.B. über Jahre hinweg, nach, so wird der Überwachungsraum, in welchem die Einrichtung auf vorhandene Objekte anspricht, stetig kleiner.

Bei einer bekannten Schaltungsanordnung der eingangs genannten Art, die in der DE-PS 34 08 261 beschrieben ist, wird dieses Problem wie folgt angegangen: Der Sender wird stetig mit einer so hohen Leistung betrieben, daß Reflexionen an stationär vorhandenen Objekten empfangen werden. Aus den so ständig registrierten Empfangssignalen wird ein Langzeit-Mittelwert gebildet. Der momentane Wert des Empfangssignales wird mit dem Langzeit-Mittelwert verglichen. Nur wenn sich gegenüber diesem eine bestimmte minimale Abweichung ergibt, löst die bekannte Schaltungsanordnung aus. Mit diesen Maßnahmen läßt sich sowohl ein erstmaliger "Selbstabgleich" der Schaltungsanordnung auf eine bestimmte Umgebung als auch eine Nachjustierung gegen kontinuierliche Veränderungen der Umgebung sowie gegen innere Alterungsvorgänge erzielen. Nachteilig ist jedoch, daß die Schaltungsanordnung zur Bildung des Langzeit-Mittelswertes ständig bestromt werden muß und zwar in einem Ausmaße, bei dem Reflexionen an stationären Objekten vom Empfänger erfaßt werden. Hiermit ist ein Energieverbrauch verbunden, der jedenfalls dann nicht mehr tragbar ist, wenn die Schaltungsanordnung aus einer Batterie gespeist werden soll. Außerdem versagt diese bekannte Einrichtung, wenn sich innerhalb der näheren Umgebung keine stationären Objekte befinden, an denen zur Bildung des Langzeit-Mittelwertes Strahlung reflektiert werden könnte.

In der älteren, nicht vorveröffentlichten Patentanmeldung P 40 19 927.4 ist eine Einrichtung zur berührungslosen Steuerung einer Sanitärarmatur beschrieben, welche zur Einstellung und Nachführung der Empfindlichkeit einen Sonderbetriebsmodus aufweist, der in bestimmten zeitlichen Abständen durchgeführt wird. In diesem Sonderbetriebsmodus wird die vom Sender abgegebene Leistung schrittweise erhöht, bis die von stationären Objekten auf den Empfänger zurückgeworfene Strahlung einen solchen Wert erreicht hat, bei welcher der Detektionskreis auslöst. Nunmehr wird die Sendeleistung wieder ein wenig zurückgenommen und erreicht so einen Wert, bei dem die stationären Objekte gerade noch zu keiner Auslösung führen. Auch diese Einrichtung erzielt einen Selbstabgleich sowohl gegen innere Alterungsvorgänge als auch gegen Veränderungen in der Umgebung. Ein erhöhter Energieverbrauch liegt bei dieser Einrichtung nicht vor. Gleichwohl ist auch hier erforderlich, daß geeignete stationäre Objekte vorhanden sind, die zum Selbstabgleich herangezogen werden können.

Aufgabe der vorliegenden Erfindung ist es, eine Einrichtung der eingangs genannten Art derart auszugestalten, daß bei geringem Energieverbrauch, geringem apparativem Aufwand auch dann ein Nachführen der Empfindlichkeit bei inneren Alterungsvorgängen möglich ist, wenn keine stationären Objekte, an denen eine Reflexion des Senderlichtes dauernd stattfindet, vorhanden sind.

Diese Aufgabe wird erfindungsgemäß dadurch gelöst, daß
c) die Sende-/Empfangseinheit zusätzlich einen zweiten Empfänger enthält, welcher auf direktem Wege von einem definierten Teil der vom Sender ausgesandten Strahlung erreicht werden kann;
d) die Schaltungsanordnung zusätzlich enthält:
   da) eine Steuereinheit, welche in der Lage ist, die Ausgangsspannung der Treiberschaltung kontinuierlich, ausgehend von einem niedrigen Wert, zu erhöhen;
   db) einen zweiten Detektionskreis, dem das Ausgangssignal des zweiten Empfängers zugeführt wird und der ein Ausgangssignal erzeugt, wenn das Ausgangssignal des zweiten Empfängers einen bestimmten Schwellwert übersteigt;
   dc) einen ersten Speicher;
   dd) einen zweiten Speicher;
   de) einen Quotientenbildner, der aus dem Inhalt des ersten Speichers und des zweiten Speichers den Quotienten bildet;
   df) einen dritten Speicher, in welchem der vom Quotientenbildner erzeugte Quotient speicherbar ist;
   dg) einen Multiplikator, der aus dem Inhalt des zweiten Speichers und des dritten Speichers das Produkt bildet,
wobei
e) die Einrichtung in zwei Sondermoden betrieben werden kann, nämlich
   ea) in einem Initialisierungsmodus, in welchem die Steuereinheit die Ausgangsspannung der Treiberschaltung, ausgehend von dem niedrigen Wert, kontinuierlich erhöht und einen für diese Ausgangsspannung repräsentativen Wert in den ersten Speicher einspeichert, wenn der erste Detektionskreis ein Ausgangssignal abgibt, und einen für diese Ausgangsspannung repräsentativen Wert in den zweiten Speicher einspeichert, wenn der zweite Detektionskreis ein Ausgangssignal abgibt, derart, daß im dritten Speicher ein Wert gespeichert wird, der für den Quotienten der Ausgangsspannungen der Treiberschaltung repräsentativ ist, bei welchen der erste Detektionskreis und der zweite Detektionskreis jeweils ein Ausgangssignal erzeugen;
   eb) in einem Einstellmodus, in welchem die Steuereinheit die Ausgangsspannung der Treiberschaltung, ausgehend von dem niedrigen Wert, kontinuierlich erhöht und in dem zweiten Speicher einen für diese Ausgangsspannung repräsentativen Wert einspeichert, wenn der zweite Detektionskreis ein Ausgangssignal erzeugt, derart, daß im Multiplikator ein Wert erzeugt wird, der repräsentativ für eine Soll-Ausgangsspannung der Treiberschaltung ist, wonach die Steuerschaltung die Ausgangsspannung der Treiberschaltung an die Soll-Ausgangsspannung heranführt.

Der erfindungsgemäß zusätzlich vorgesehene zweite Empfänger, der in direkter Strahlungsverbindung mit dem Sender steht, stellt einen internen Referenzpunkt der Einrichtung dar, an welchem nach internen Alterungsvorgängen die ursprüngliche Empfindlichkeit wieder hergestellt werden kann.

Letztere wird in einem der beiden Sonderbetriebsmoden, nämlich dem Initialisierungsmodus, bestimmt. Hierzu wird in einem definierten Normabstand, etwa einem Meter, vom der Sende-/Empfangseinheit ein Normobjekt mit definiertem Reflexionsvermögen aufgestellt. Nun wird nicht nur der Wert der Ausgangsspannung der Treiberschaltung (entspricht dem Wert der Betriebsspannung des Senders) bestimmt, bei welchem der erste Empfänger (der im normalen Betriebsmodus die eigentliche Überwachungsfunktion durchführt), zur Auslösung kommt. Vielmehr wird auch derjenige Wert der Ausgangsspannung der Treiberschaltung ermittelt und festgehalten, bei welchem der zweite Detektionskreis (durch die direkt auf den zweiten Empfänger treffende Strahlung) ein Ausgangssignal erzeugt. Die Schaltungsanordnung ermittelt den Faktor, um den sich die Ausgangsspannung der Treiberschaltung bei der Auslösung des ersten Detektionskreises von derjenigen Ausgangsspannung unterscheidet, bei welcher der zweite Detektionskreis ausgelöst wird. Dieser Faktor wird im dritten Speicher dauerhaft abgelegt. Der im dritten Speicher enthaltene Faktor spiegelt also die individuellen Eigenschaften der jeweiligen Einrichtung zur berührungslosen Steuerung der Sanitärarmatur nach der (gegebenenfalls bereits werkseitig) durchgeführten) Initialisierung wieder.

Zur Nachführung der Empfindlichkeit wird nach einer bestimmten Betriebsdauer der Einrichtung der zweite Sondermodus, ein Einstellmodus, durchgeführt. Hierzu wird als interne Referenz für mögliche innere Veränderungen an den elektrischen Komponenten diejenige Ausgangsspannung der Treiberschaltung herangezogen, bei welcher der zweite Detektionskreis auslöst. Diese kann ohne äußere Referenz, also insbesondere auch ohne äußere stationäre Objekte, ermittelt werden. Hat beispielsweise ein interner Verstärkungsfaktor auf Grund vom Alterungsvorgängen der elektronischen Komponenten nachgelassen, so muß die Ausgangsspannung der Treiberschaltung auf einen höheren Wert als früher gebracht werden, damit der zweite Detektionskreis anspricht. Unter der plausiblen Annahme, daß das Alterungsverhalten beider Empfänger und beider Detektionskreise in etwa dasselbe ist, läßt sich nunmehr diejenige Ausgangsspannung der Treiberschaltung ohne weiteres ermitteln, bei welcher die Empfindlichkeit des ersten, also für die eigentliche Überwachungsfunktion zuständigen Empfängers wieder auf den ursprünglichen Wert gebracht wird: Es muß dann einfach die Ausgangsspannung der Treiberschaltung, bei welcher der zweite Detektionskreis ausgelöst hat, um genau denjenigen Faktor erhöht werden, welcher im Initialisierungsmodus ermittelt und im dritten Speicher abgelegt worden ist. Der Einstellmodus wird dadurch abgeschlossen, daß der Mikroprozessor die Ausgangsspannung der Treiberschaltung auf diesen so ermittelten Sollwert bringt.

Eine alternative Ausführungsform der Erfindung, die jedoch nach der gleichen grundlegenden Logik arbeitet, zeichnet sich dadurch aus, daß
c) die Sende-/Empfangseinheit zusätzlich einen zweiten Empfänger enthält, welcher auf direktem Wege von einem definierten Teil der vom Sender ausgesandten Strahlung erreicht werden kann;
d) die Schaltungsanordnung zusätzlich enthält:
   da) einen zweiten Detektionskreis, dem das Ausgangssignal des zweiten Empfängers zugeführt wird und der ein Ausgangssignal erzeugt, wenn das Ausgangssignal des zweiten Empfängers einen bestimmten Schwellwert übersteigt;
   db) eine Steuereinheit, welche in der Lage ist, die Verstärkung der beiden Detektionskreise kontinuierlich, ausgehend von einem niedrigen Wert, zu erhöhen;
   dc) einen ersten Speicher;
   dd) einen zweiten Speicher;
   de) einen Quotientenbildner, der aus dem Inhalt des ersten Speichers und des zweiten Speichers den Quotienten bildet;
   df) einen dritten Speicher, in welchem der vom Quotientenbildner erzeugte Quotient speicherbar ist;
   dg) einen Multiplikator, der aus dem Inhalt des zweiten Speichers und des dritten Speichers das Produkt bildet,
wobei
e) die Einrichtung in zwei Sondermoden betrieben werden kann, nämlich
   ea) in einem Initialisierungsmodus, in welchem die Steuereinheit die Verstärkung der Detektionskreise, ausgehend von dem niedrigen Wert, kontinuierlich erhöht und einen für diese Verstärkung repräsentativen Spannungswert in den ersten Speicher einspeichert, wenn der erste Detektionskreis ein Ausgangssignal abgibt, und einen für diese Verstärkung repräsentativen Spannungswert in den zweiten Speicher einspeichert, wenn der zweite Detektionskreis ein Ausgangssignal abgibt, derart, daß im dritten Speicher ein Wert gespeichert wird, der für den Quotienten der Verstärkungen der Detektionskreise repräsentativ ist, bei welchen der erste Detektionskreis und der zweite Detektionskreis jeweils ein Ausgangssignal erzeugen;
   eb) in einem Einstellmodus, in welchem die Steuereinheit die Verstärkung des zweiten Detektionskreises, ausgehend von dem niedrigen Wert, kontinuierlich erhöht und in dem zweiten Speicher einen für diejenige verstärkung repräsentativen Wert einspeichert, bei welcher der zweite Detektionskreis ein Ausgangssignal erzeugt, derart, daß im Multiplikator ein Wert erzeugt wird, der repräsentativ für eine Soll-Verstärkung des ersten Detektionskreises ist, wonach die Steuerschaltung die Verstärkung des ersten Detektionskreises an die Soll-Verstärkung heranführt.

Einziger Unterschied dieses zweiten Ausführungsbeispieles gegenüber dem ersten ist, daß die Einstellung der Empfindlichkeit der Einrichtung nicht über die Sendeleistung sondern über die Verstärkung der Detektionskreise erfolgt.

Da im allgemeinen der Strahlungsweg zwischen dem Sender und dem zweiten Empfänger sehr viel kürzer als der über den Überwachungsraum und das dort befindliche Objekt laufende Strahlungsweg zwischen dem Sender und dem ersten Empfänger ist, empfiehlt es sich, wenn zwischen dem Sender und dem zweiten Empfänger eine Einrichtung vorgesehen ist, welche die vom Sender ausgehende Strahlung in definierter Weise dämpft. Diese Dämpfung simuliert dann in gewissem Ausmaße den Strahlungsverlust, der sich durch den größeren Strahlungsweg zwischen dem Sender und dem ersten Empfänger ergibt.

Diese dämpfende Einrichtung kann aus einem die Strahlung des Senders definiert absorbierenden Materialblock bestehen.

Alternativ kommt hierfür auch eine Lochblende oder allgemein eine entsprechende geometrische Gestaltung des Strahlungsweges zwischen dem Sender und dem zweiten Empfänger in Frage.

Da die beiden Detektionskreise nach dem oben Gesagten im allgemeinen nicht gleichzeitig sondern hintereinander betrieben werden, können sie in bestimmten Fällen physisch von denselben Bauelementen gebildet werden, die abwechselnd entweder mit dem ersten Empfänger und dem ersten Speicher oder mit dem zweiten Empfänger und dem zweiten Speicher verbunden werden.

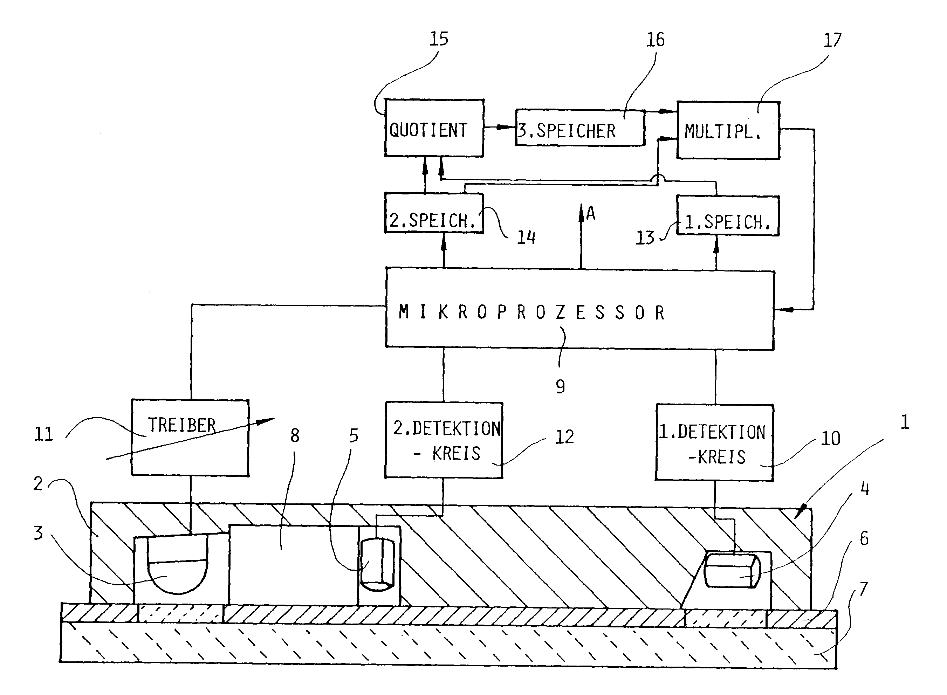

Ein Ausführungsbeispiel der Erfindung wird nachfolgend anhand der Zeichnung näher erläutert; die einzige Figur zeigt schematisch die Sende-/Empfangseinheit einer Einrichtung zum berührungslosen Steuern einer Sanitärarmatur mit der zu ihrem Betrieb verwendeten Schaltungsanordnung.

In der Zeichnung ist mit dem Bezugszeichen 1 eine Sende-/ Empfangseinheit dargestellt, die je nach Einsatzgebiet beispielsweise in der Wand hinter einem Urinal, einer Dusche oder auch direkt in der zu steuernden Sanitärarmatur untergebracht werden kann. Die Sende-/Empfangseinheit 1 umfaßt einen Halteblock 2, in dem eine Sendediode 3, eine erste Empfangsdiode 4 und eine zweite, als Referenzdiode dienende Empfangsdiode 5 untergebracht sind. Vor den verschiedenen Dioden 3, 4 und 5 ist eine Filterplatte 6 angebracht, die in dem unmittelbar vor den Dioden 3 und 4 liegenden Bereich für die Arbeitswellenlänge der verwendeten Strahlung (im allgemeinen Infrarotstrahlung) durchlässig ist. Vor der Filterplatte 6 liegt eine zusätzliche, Zier- und Schutzzwekken dienende Abdeckplatte 7, die zumindest ebenfalls im Arbeitswellenlängenbereich transparent ist.

Zwischen der Sendediode 3 und der zweiten Empfangsdiode 5 existiert innerhalb der Sende-/Empfangseinheit 1 eine direkte optische Verbindung. In dieser liegt ein Block 8 aus einem Material, welches die von der Sendediode 3 zur Empfangsdiode 5 gelangende Strahlung in definierter WEise dämpft.

Die gesamte Schaltungsanordnung wird von einem Mikroprozessor 9 gesteuert. Sie umfaßt in an und für sich bekannter Weise einen ersten Detektionskreis 10, welcher an die erste Empfangsdiode 4 angeschlossen ist. Der erste Detektionskreis 10 gibt dann ein Ausgangssignal ab, wenn die von der ersten Empfangsdiode 4 empfangene Strahlung einen bestimmten Schwellwert überschritten hat. Das Ausgangssignal des ersten Detektionskreises 10 wird im Normalbetrieb vom Mikroprozessor 9 nach einer bekannten, hier nicht weiter interessierenden Logik zur Erzeugung eines Ausgangssignales A verwendet, mit welchem der Wasserfluß durch die Sanitärarmatur freigegeben bzw. beendet wird.

Die Sendediode 3 wird von einer Treiberschaltung 11 beaufschlagt, deren an die Sendediode 3 gelegte Ausgangsspannung durch den Mikroprozessor 9 verändert werden kann. Im Normalbetrieb der Einrichtung wird die Treiberschaltung 11 mit einer konstanten Ausgangsspannung betrieben. Der Mikroprozessor 9, die Treiberschaltung 11 (mit konstanter Ausgangsspannung), die Sendediode 3, die erste Empfangsdiode 4 und der erste Detektionskreis 10 stellen also im Normalbetrieb der Einrichtung Komponenten dar, wie sie sich auch bei bekannten gattungsgemäßen Einrichtungen zur berührungslosen Steuerung von Sanitärarmaturen grundsätzlich finden.

Die weiteren, bisher noch nicht beschriebenen Komponenten werden ausschließlich in Sonder-Betriebsmoden eingesetzt, welche der Bestimmung bzw. Nachführung der Empfindlichkeit dienen.

Wichtigste Komponente ist dabei die zweite Empfangsdiode 5, welche über den Block 8 in direkter optischer Verbindung mit der Sendediode 3 steht. Das Ausgangssignal der zweiten Empfangsdiode 5 wird von dem zweiten Detektionskreis 12 in grundsätzlich derselben Weise verarbeitet, wie der erste Detektionskreis 10 das Ausgangssignal der ersten Empfangsdiode 4 verarbeitet: Er gibt dann ein Ausgangssignal ab, wenn das Ausgangssignal der zweiten Empfangsdiode 5 einen bestimmten Schwellwert überschritten hat.

Weitere Schaltungskomponenten, die in den Sonder-Betriebsmoden benötigt werden, sind ein erster Speicher 13, ein zweiter Speicher 14, ein Quotientenbildner 15, welchem der Inhalt der beiden Speicher 13, 14 zur Bildung eines Quotienten zugeführt wird, ein dritter Speicher 16, in welchem der vom Quotientenbildner 15 gebildete Wert abgelegt werden kann, sowie ein Multiplikator 17, welcher das Produkt aus den Inhalten des zweiten Speichers 14 und des dritten Speichers 16 bilden und dieses dem Mikroprozessor 9 zuführen kann.

Die Funktionsweise der zuletzt erwähnten weiteren Komponenten ist wie folgt:

Die Empfindlichkeit der Einrichtung zur berührungslosen Steuerung einer Sanitärarmatur wird bereits werksseitig in einem Initialisierungsmodus voreingestellt und bestimmt. Hierzu wird die Sende-/Empfangseinheit 1 in einem bestimmten Abstand, beispielsweise einem Meter, vor einem Objekt mit definiertem Reflexionsvermögen positioniert. Mit Hilfe des Mikroprozessors 9 wird die Ausgangsspannung der Treiberschaltung 11 kontinuierlich erhöht, wodurch sich die von der Sendediode 3 abgestrahlte Lichtintensität in gleichem Maße kontinuierlich vergrößert. Gleichzeitig wird beobachtet, wann der erste Detektionskreis 10 und der zweite Detektionskreis 12 ein Ausgangssignal abgeben. Der Wert der von der Treiberschaltung 11 abgegebenen Ausgangsspannung, bei welchem der zweite Detektionskreis 12 anspricht, oder ein entsprechender, hierfür repräsentativer Spannungswert wird in dem zweiten Speicher 14 abgelegt. Entsprechend wird der Wert der Ausgangsspannung der Treiberschaltung 11, bei welcher der erste Detektionskreis 10 anspricht, oder ein entsprechender, hierfür repräsentativer Spannungswert im ersten Speicher 13 abgelegt. Aus diesen beiden Spannungswerten wird im Quotientenbildner 15 der Quotient gebildet und im dritten Speicher 16 abgelegt. Der Inhalt des Speichers 16 wird während der gesamten Betriebszeit der Einrichtung nicht mehr gelöscht; geht er unabsichtlich verloren, muß der Initialisierungsmodus wiederholt werden.

Im Laufe der Zeit erfahren die verschiedenen elektrischen und in gewissem Umfange auch mechanischen Komponenten der Einrichtung eine gewisse Alterung, welche eine Veränderung der Gesamtempfindlichkeit zur Folge haben kann. Die ursprüngliche Empfindlichkeit kann nunmehr in einem Einstellmodus in bestimmten zeitlichen Abständen in folgender Weise wieder hergestellt werden:

Der Einstellmodus wird dadurch eingeleitet, daß der Mikroprozessor 9 in ähnlicher Weise wie beim Initialisierungsmodus die Ausgangsspannung der Treiberschaltung 11, ausgehend von einem niedrigen Wert, beispielsweise dem Wert 0, kontinuierlich erhöht. Dabei wird nunmehr im Gegensatz zum Initialisierungsmodus nur noch das Ausgangssignal des zweiten Detektionskreises 12 beobachtet. Spricht der zweite Detektionskreis 12 an, so wird der Wert der Ausgangsspannung der Treiberschaltung 11 erneut im zweiten Speicher 14 abgelegt Der Inhalt dieses Speichers 14 wird nunmehr im Einstellmodus an einen Eingang des Multiplikators 17 gelegt, dessen zweitem Eingang der Inhalt des dritten Speichers 16, also der im Initialisierungsmodus ermittelte Quotient, zugeführt wird. Der Multiplikator 17 bildet das Produkt aus diesen beiden Größen. Dieses Produkt entspricht demjenigen Wert der Ausgangsspannung der Treiberschaltung 11 ar, mit welchem diese betrieben werden muß, damit die ursprüngliche Empfindlichkeit im Normalbetrieb wieder hergestellt ist. Der Mikroprozessor 9, welchem das Ausgangssignal des Multiplikators 17 zugeführt wird, stellt daher die Treiberschaltung 11 auf diese Ausgangsspannung ein. Damit ist der Einstellmodus abgeschlossen. Die gesamte Einrichtung kann wiederum in den normalen Betriebsmodus übergehen. Sie besitzt nunmehr erneut dieselbe Empfindlichkeit, die werksseitig im Initialisierungsmodus vorgegeben wurde.

Bei der obigen Beschreibung des Ausführungsbeispieles waren für die erste Empfangsdiode 4 und die zweite Empfangsdiode 5 zwei getrennte Detektionskreise 10 und 12 vorgesehen. Da jedoch die beiden Detektionskreise 10 und 12 im allgemeinen nicht gleichzeitig sondern nur aufeinanderfolgend benötigt werden, kann ihre Funktion auch von einem einzigen Detektionskreis übernommen werden, der vom Mikroprozessor abwechselnd mit den beiden Empfangsdioden 4 und 5 und den entsprechenden Speichern 13 bzw. 14 verbunden wird.

Eine zweite, in der Zeichnung nicht dargestellte Ausführungsform arbeitet nach der gleichen grundlegenden Logik. Allerdings wird hier die Sendeleistung kostant gehalten. Statt dessen wird im Initialisierungsmodus bei der Einstellung der Anfangsempfindlichkeit und der Ermittlung der hierfür charakteristischen Werte, die in dem ersten und zweiten Speicher abzulegen sind, die Verstärkung der beiden Detektionskreise verändert. Dies geschieht entsprechend auch im Einstellmodus, in welchem die Verstärkung des ersten Detektionskreises so nachgefahren wird, daß die ursprüngliche Empfindlichkeit der Einrichtung wieder erreicht wird, wobei die Versärkung, bei welcher der zweite Detektionskreis auslöst, als "innerer Referenzpunkt" dient.

## Patentansprüche

1. Einrichtung zur berührungslosen Steuerung einer Sanitärarmatur mit
a) einer Sende-/Empfangseinheit, welche enthält:
aa) einen Sender, welcher eine Strahlung in einen Überwachungsraum aussendet;
ab) einen ersten Empfänger, welcher Strahlung, die an einem Objekt im Überwachungsraum reflektiert wurde, empfängt;
b) einer Schaltungsanordnung, welche enthält:
ba) eine Treiberschaltung, welche eine Spannung zum Betrieb des Senders bereitstellt, deren Größe die Intensität der abgegebenen Strahlung bestimmt;
bc) einen ersten Detektionskreis, dem das Ausgangssignal des ersten Empfängers zugeführt wird und ein Ausgangssignal erzeugt, wenn das Ausgangssignal des ersten Empfängers einen bestimmten Schwellwert übersteigt,
dadurch gekennzeichnet, daß
c) die Sende-/Empfangseinheit (1) zusätzlich einen zweiten Empfänger (5) enthält, welcher auf direktem Wege von einem definierten Teil der vom Sender (3) ausgesandten Strahlung erreicht werden kann;
d) die Schaltungsanordnung enthält:
da) eine Steuereinheit (9), welche in der Lage ist, die Ausgangsspannung der Treiberschaltung (11) kontinuierlich, ausgehend von einem niedrigen Wert, zu erhöhen;
db) einen zweiten Detektionskreis (12), dem das Ausgangssignal des zweiten Empfängers (5) zugeführt wird und der ein Ausgangssignal erzeugt, wenn das Ausgangssignal des zweiten Empfängers (5) einen bestimmten Schwellwert übersteigt;
dc) einen ersten Speicher (13);
dd) einen zweiten Speicher (14);
de) einen Quotientenbildner (15), der aus dem Inhalt des ersten Speichers (13) und des zweiten Speichers (14) den Quotienten bildet;
df) einen dritten Speicher (16), in welchem der vom Quotientenbildner (15) erzeugte Quotient speicherbar ist;
dg) einen Multiplikator (17), der aus dem Inhalt des zweiten Speichers (14) und des dritten Speichers (16) das Produkt bildet,
wobei
e) die Einrichtung in zwei Sondermoden betrieben werden kann, nämlich
ea) in einem Initialisierungsmodus, in welchem die Steu(9) die Ausgangsspannung der Treiberschaltung (11), ausgehend von dem niedrigen Wert, kontinuierlich erhöht und einen für diese Ausgangsspannung repräsentativen Wert in dem ersten Speicher (13) einspeichert, wenn der erste Detektionskreis (10) ein Ausgangssignal abgibt, und einen für diese Ausgangsspannung repräsentativen Wert in den zweiten Speicher (14) einspeichert, wenn der zweite Detektionskreis (12) ein Ausgangssignal abgibt, derart, daß im dritten Speicher (16) ein Wert gespeichert wird, der für den Quotienten der Ausgangsspannungen der Treiberschaltung (11) repräsentativ ist, bei welchen der erste Detektionskreis (10) und der zweite Detektionskreis (12) jeweils ein Ausgangssignal erzeugen;
eb) in einem Einstellmodus, in welchem die Steuereinheit (9) die Ausgangsspannung der Treiberschaltung (11), ausgehend von dem niedrigen Wert, kontinuierlich erhöht und in dem zweiten Speicher (14) einen für diese Ausgangsspannung repräsentativen Wert einspeichert, wenn der zweite Detektionskreis (12) ein Ausgangssignal erzeugt, derart, daß im Multiplikator (17) ein Wert erzeugt wird, der repräsentativ für eine Soll-Ausgangsspannung der Treiberschaltung (11) ist, wonach die Steuereinheit (9) die Ausgangsspannung der Treiberschaltung (11) an die Soll-Ausgangsspannung heranführt.

2. Einrichtung zur berührungslosen Steuerung einer Sanitärarmatur mit
a) einer Sende-/Empfangseinheit, welche enthält:
aa) einen Sender, welcher eine Strahlung in einen Überwachungsraum chungsraum aussendet;
ab) einen ersten Empfänger, welcher Strahlung, die an einem Objekt im Überwachungsraum reflektiert wurde, empfängt;
b) einer Schaltungsanordnung, welche enthält:
ba) eine Treiberschaltung, welche eine Spannung zum Betrieb des Senders bereitstellt, deren Größe die Intensität der abgegebenen Strahlung bestimmt;
bc) einen ersten Detektionskreis, dem das Ausgangssignal des ersten Empfängers zugeführt wird und ein Ausgangssignal erzeugt, wenn das Ausgangssignal des ersten Empfängers einen bestimmten Schwellwert übersteigt,
dadurch gekennzeichnet, daß
c) die Sende-/Empfangseinheit (1) zusätzlich einen zweiten Empfänger (5) enthält, welcher auf direktem Wege von einem definierten Teil der vom Sender (3) ausgesandten Strahlung erreicht werden kann;
d) die Schaltungsanordnung enthält:
da) einen zweiten Detektionskreis (12), dem das Ausgangssignal des zweiten Empfängers (5) zugeführt wird und der ein Ausgangssignal erzeugt, wenn das Ausgangssignal des zweiten Empfängers (5) einen bestimmten Schwellwert übersteigt;
db) eine Steuereinheit (9), welche in der Lage ist, die Verstärkung der beiden Detektionskreise (10, 12) kontinuierlich, ausgehend von einem niedrigen Wert, zu erhöhen;
dc) einen ersten Speicher (13);
dd) einen zweiten Speicher (14);
de) einen Quotientenbildner (15), der aus dem Inhalt des ersten Speichers (13) und des zweiten Speichers (14) den Quotienten bildet;
df) einen dritten Speicher (16), in welchem der vom Quotientenbildner (15) erzeugte Quotient speicherbar ist;
dg) einen Multiplikator (17), der aus dem Inhalt des zweiten Speichers (14) und des dritten Speichers (16) das Produkt bildet,
wobei
e) die Einrichtung in zwei Sondermoden betrieben werden kann, nämlich
ea) in einem Initialisierungsmodus, in welchem die Steuereinheit (9) die Verstärkung der Detektionskreise (10, 12), ausgehend von dem niedrigen Wert, kontinuierlich erhöht und einen für diese Verstärkung nung repräsentativen Spannungswert in dem ersten Speicher (13) einspeichert, wenn der erste Detektionskreis (10) ein Ausgangssignal abgibt, und einen für diese Verstärkung repräsentativen Spannungswert in den zweiten Speicher (14) einspeichert, wenn der zweite Detektionskreis (12) ein Ausgangssignal abgibt, derart, daß im dritten Speicher (16) ein Wert gespeichert wird, der für den Quotienten der Verstärkungen der Detektionskreise (10, 12) repräsentativ ist, bei welchen der erste Detektionskreis (10) und der zweite Detektionskreis (12) jeweils ein Ausgangssignal erzeugen;
eb) in einem Einstellmodus, in welchem die Steuereinheit (9) die Verstärkung des zweiten Detektionskreises (12), ausgehend von dem niedrigen Wert, kontinuierlich erhöht und in dem zweiten Speicher (14) einen für diejenige Verstärkung repräsentativen Spannungswert einspeichert, bei welcher der zweite Detektionskreis (12) ein Ausgangssignal erzeugt, derart, daß im Multiplikator (17) ein Wert erzeugt wird, der repräsentativ für eine Soll-Verstärkung des ersten Detektionskreises (10) ist, wonach die Steuereinheit (9) die Verstärkung des ersten Detektionskreises (10) an die Soll-Verstärkung heranführt.

3. Einrichtung nach Anspruch 1 oder 2, dadurch gekennzeichnet, daß zwischen dem Sender (3) und dem zweiten Empfänger (5) eine Einrichtung (8) vorgesehen ist, welche die vom Sender (3) ausgehende Strahlung in definierter Weise dämpft.

4. Einrichtung nach Anspruch 3, dadurch gekennzeichnet, daß die dämpfende Einrichtung (8) aus einem die Strahlung des Senders (3) definiert absorbierenden Materialblock besteht.

5. Einrichtung nach Anspruch 3, dadurch gekennzeichnet, daß die dämpfende Einrichtung (8) aus einer Lochblende besteht.

6. Einrichtung nach einem der vorhergehenden Ansprüche, dadurch gekennzeichnet, daß die beiden Detektionskreise (10, 12) physisch von denselben Bauelementen gebildet werden, die abwechselnd entweder mit dem ersten Empfänger (4) und dem ersten Speicher (13) oder mit dem zweiten Empfänger (5) und dem zweiten Speicher (14) verbunden werden.

## Claims

1. Device for the non-contact control of a sanitary fitting comprising
a) an emitting/receiving unit consisting of:
aa) a receiver which emits radiation into a monitoring space;
ab) a first receiver which receives radiation reflected from an object in the monitoring space;
b) a circuit arrangement consisting of:
ba) a driving circuit which provides a voltage for operating the emitter, the magnitude of which determines the intensity of the emitted radiation;
bc) a first detection circuit to which the output signal of the first receiver is supplied and generates an output signal when the output signal of the first receiver exceeds a certain threshold value,
characterized in that
c) the emitting/receiving unit (1) also consists of a second receiver-(5) which can be reached by a direct route by a defined part of the radiation emitted by the emitter (3);
d) the circuit arrangement consists of:
da) a control unit (9) which has the capability of continuously increasing the output voltage of the driving circuit (11), starting from a low value;
db) a second detection circuit (12) to which the output signal of the second receiver (5) is supplied and which generates an output signal when the output signal of the second receiver (5) exceeds a certain threshold value;
dc) a first store (13);
dd) a second store (14);
de) a quotient former (15) which forms the quotients from the contents of the first store (13) and the second store (14);
df) a third store (16) in which the quotient produced by the quotient former (15) can be stored;
dg) a multiplier (17) which forms the product of the contents of the second store (14) and the third store (16),
whereby
e) the device can be operated in two special modes, namely
ea) in an initialisation mode in which the control unit (9) continuously increases the output voltage of the driving circuit (11), starting from a low value, and enters a value which is representative of this output voltage in the first store (13) when the first detection circuit (10) delivers an output signal and enters a value which is representative of this output voltage in the second store (14) when the second detection circuit (12) delivers an output signal, such that there is stored in the third store (16) a value which is representative of the quotients of the output voltages of the driving circuit (11), at which the first detection circuit (10) and the second detection circuit (12) each generate an output signal.
eb) in an adjusting mode, in which the control unit (9) continuously increases the output voltage of the driving circuit (11), starting from a low value, and enters a voltage which is representative of this output voltage in the second store (14) when the second detection circuit (12) generates an output signal, such that there is produced in the multiplier (17) a value which is representative of a desired output voltage of the driving circuit (11), according to which the control unit (9) brings the output voltage of the driving circuit (11) up to the desired output voltage.

2. Device for the non-contact control of a sanitary fitting, comprising
a) an emitting/receiving unit which consists of:
aa) an emitter which emits radiation into a monitoring space;
ab) a first receiver which receives radiation reflected from an object in the monitoring space;
b) a circuit arrangement which consists of:
ba) a driving circuit which produces a voltage for operating the emitter, the magnitude of which determines the intensity of the emitted radiation;
bc) a first detection circuit to which the output signal of the first receiver is supplied and generates an output signal when the output signal of the first receiver exceeds a certain threshold value,
characterised in that
c) the emitting/receiving unit (1) also consists of a second receiver (5) which can be reached by a direct route by a defined part of the radiation emitted by the emitter (3);
d) the circuit arrangement consists of:
da) a second detection circuit (12) to which the output signal of the second receiver (5) is supplied and which generates an output signal when the output signal of the second receiver (5) exceeds a certain threshold value;
db) a control unit (9) which has the capability of continuously increasing the gain of the two detection circuits (10, 12), starting from a low value;
dc) a first store (13);
dd) a second store (14);
de) a quotient former (15) which forms the quotients from the contents of the first store (13) and the second store (14);
df) a third store (16) in which the quotient produced by the quotient former (15) can be stored;
dg) a multiplier (17) which forms the product of the contents of the second store (14) and the third store (16),
whereby
e) the device can be operated in two special modes, namely
ea) in an initialisation mode in which the control unit (9) continuously increases the gain of the detection circuits (10, 12), starting from a low value, and enters a voltage value which is representative of this gain in the first store (13) when the first detection circuit (10) delivers an output signal, and enters a voltage value which is representative of this gain in the second store (14) when the second detection circuit (12) delivers an output signal, such that there is stored in the third store (16) a value which is representative of the quotients of the gains of the detection circuits (10, 12) at which the first detection circuit (10) and the second detection circuit (12) each generate an output signal;
eb) in an adjusting mode, in which the control unit (9) continuously increases the gain of the second detection circuit (12), starting from a low value, and enters in the second store (14) a voltage value which is representative of that gain and at which the second detection circuit (12) generates an output signal, such that there is generated in the multiplier (17) a value which is representative of a desired gain of the first detection circuit (10), according to which the control unit (9) brings the gain of the first detection circuit (10) up to the desired gain.

3. Device according to Claim 1 or 2, characterised in that there is fitted between the emitter (3) and the second receiver (5) a device (8) which attenuates the radiation emitted by the emitter (3) in a defined manner.

4. Device according to Claim 3, characterised in that the attenuating device (8) consists of a block of material which absorbs the radiation from the emitter (3) in a defined manner.

5. Device according to Claim 3, characterised in that the attenuating device (8) consists of an apertured diaphragm.

6. Device according to any one of the foregoing Claims, characterised in that the two detection circuits (10, 12) are physically formed from the same components which are connected in turn either to the first receiver (4) and the first store (13) or to the second receiver (5) and the second store (14).

## Revendications

1. Dispositif pour commander une armature sanitaire à distance, avec
a) une unité d'émission/réception, qui comprend :
aa) un émetteur, qui émet un rayonnement dans un espace surveillé ;
ab) un premier récepteur, qui reçoit le rayonnement qui a été réfléchi sur un objet dans l'espace surveillé ;
b) un montage, qui comprend :
ba) un montage excitateur qui met à disposition, pour le fonctionnement de l'émetteur, une tension dont la grandeur détermine l'intensité du rayonnement délivré ;
bc) un premier circuit de détection, auquel est transmis le signal de sortie du premier récepteur et qui produit un signal de sortie lorsque le signal de sortie du premier récepteur dépasse une valeur de seuil déterminée,
**caractérisé** en ce que
c) l'unité d'émission/réception (1) comprend en outre un deuxième récepteur (5), qui peut être atteint par voie directe par une partie définie du rayonnement émis par l'émetteur (3) ;
d) le montage comprend :
da) une unité de commande (9), qui est à même d'augmenter en continu la tension de sortie du montage excitateur (11) à partir d'une valeur basse ;
db) un deuxième circuit de détection (12), auquel est transmis le signal de sortie du deuxième récepteur (5) et qui produit un signal de sortie lorsque le signal de sortie du deuxième récepteur (5) dépasse une valeur de seuil déterminée ;
dc) une première mémoire (13) ;
dd) une deuxième mémoire (14) ;
de) un créateur de quotient (15), qui forme le quotient du contenu de la première mémoire (13) et de la deuxième mémoire (14) ;
df) une troisième mémoire (16), dans laquelle peut être enregistré le quotient produit par le créateur de quotient (15) ;
dg) un multiplicateur (17), qui forme le produit du contenu de la deuxième mémoire (14) et de la troisième mémoire (16),
e) le dispositif pouvant être exploité dans deux modes spéciaux, à savoir
ea) dans un mode d'initialisation, dans lequel l'unité de commande (9) augmente en continu la tension de sortie du montage excitateur (11) à partir de la valeur basse, enregistre une valeur représentative de cette tension de sortie dans la première mémoire (13) lorsque le premier circuit de détection (10) délivre un signal de sortie, et enregistre une valeur représentative de cette tension de sortie dans la deuxième mémoire (14) lorsque le deuxième circuit de détection (12) délivre un signal de sortie, de telle sorte qu'est enregistrée dans la troisième mémoire (16) une valeur représentative du quotient des tensions de sortie du montage excitateur (11) pour lesquelles le premier circuit de détection (10) et le deuxième circuit de détection (12) produisent respectivement un signal de sortie ;
eb) dans un mode de réglage, dans lequel l'unité de commande (9) augmente en continu la tension de sortie du montage excitateur (11) à partir de la valeur basse, et enregistre une valeur représentative de cette tension de sortie dans la deuxième mémoire (14) lorsque le deuxième circuit de détection (12) produit un signal de sortie, de telle sorte qu'est produite dans le multiplicateur (17) une valeur qui est représentative d'une tension de sortie de consigne du montage excitateur (11), à la suite de quoi l'unité de commande (9) amène la tension de sortie du montage excitateur (11) à la tension de sortie de consigne.

2. Dispositif pour commander une armature sanitaire à distance, avec
a) une unité d'émission/réception, qui comprend :
aa) un émetteur, qui émet un rayonnement dans un espace surveillé ;
ab) un premier récepteur, qui reçoit le rayonnement qui a été réfléchi sur un objet dans l'espace surveillé ;
b) un montage, qui comprend :
ba) un montage excitateur qui met à disposition, pour le fonctionnement de l'émetteur, une tension dont la grandeur détermine l'intensité du rayonnement délivré ;
bc) un premier circuit de détection, auquel est transmis le signal de sortie du premier récepteur et qui produit un signal de sortie lorsque le signal de sortie du premier récepteur dépasse une valeur de seuil déterminée,
**caractérisé** en ce que
c) l'unité d'émission/réception (1) comprend en outre un deuxième récepteur (5), qui peut être atteint par voie directe par une partie définie du rayonnement émis par l'émetteur (3) ;
d) le montage comprend :
da) un deuxième circuit de détection (12), auquel est transmis le signal de sortie du deuxième récepteur (5) et qui produit un signal de sortie lorsque le signal de sortie du deuxième récepteur (5) dépasse une valeur de seuil déterminée ;
db) une unité de commande (9), qui est à même d'augmenter en continu, à partir d'une valeur basse, l'amplification des deux circuits de détection (10, 12) ;
dc) une première mémoire (13) ;
dd) une deuxième mémoire (14) ;
de) un créateur de quotient (15), qui forme le quotient du contenu de la première mémoire (13) et de la deuxième mémoire (14) ;
df) une troisième mémoire (16), dans laquelle peut être enregistré le quotient produit par le créateur de quotient (15) ;
dg) un multiplicateur (17), qui forme le produit du contenu de la deuxième mémoire (14) et de la troisième mémoire (16),
e) le dispositif pouvant être exploité dans deux modes spéciaux, à savoir
ea) dans un mode d'initialisation, dans lequel l'unité de commande (9) augmente en continu l'amplification des circuits de détection (10, 12) à partir de la valeur basse, enregistre une valeur de tension représentative de cette amplification dans la première mémoire (13) lorsque le premier circuit de détection (10) délivre un signal de sortie, et enregistre une valeur de tension représentative de cette amplification dans la deuxième mémoire (14) lorsque le deuxième circuit de détection (12) délivre un signal de sortie, de telle sorte qu'est enregistrée dans la troisième mémoire (16) une valeur représentative du quotient des amplifications des circuits de détection (10, 12) pour lesquelles le premier circuit de détection (10) et le deuxième circuit de détection (12) produisent respectivement un signal de sortie ;
eb) dans un mode de réglage, dans lequel l'unité de commande (9) augmente en continu l'amplification du deuxième circuit de détection (12) à partir de la valeur basse, et enregistre dans la deuxième mémoire (14) une valeur de tension représentative de l'amplification pour laquelle le deuxième circuit de détection (12) produit un signal de sortie, de telle sorte qu'est produite dans le multiplicateur (17) une valeur qui est représentative d'une amplification de consigne du premier circuit de détection (10), à la suite de quoi l'unité de commande (9) amène l'amplification du premier circuit de détection (10) à l'amplification de consigne.

3. Dispositif selon la revendication 1 ou 2, **caractérisé** en ce qu'est prévu, entre l'émetteur (3) et le deuxième récepteur (5), un dispositif (8) qui affaiblit d'une manière définie le rayonnement partant de l'émetteur (3).

4. Dispositif selon la revendication 3, caractérisé en ce que le dispositif d'affaiblissement (8) est constitué par un bloc de matériau qui absorbe d'une manière définie le rayonnement de l'émetteur (3).

5. Dispositif selon la revendication 3, **caractérisé** en ce que le dispositif d'affaiblissement (8) est constitué par un sténopé.

6. Dispositif selon une des revendications précédentes, **caractérisé** en ce que les deux circuits de détection (10, 12) sont physiquement formés par les mêmes éléments qui sont alternativement reliés, soit au premier récepteur (4) et à la première mémoire (13), soit au deuxième récepteur (5) et à la deuxième mémoire (14).
